# FASCICULE DE BREVET EUROPEEN

(11) **EP 2 697 308 B1**
(45) Date de publication et mention de la délivrance du brevet: **22.01.2020**
(21) Numéro de dépôt: 12713988.9
(22) Date de dépôt: 12.04.2012
(51) Int. Cl.: C08L 77/00, C08L 77/02, C08L 77/06, C08K 5/17

(54) **COMPOSITION POLYAMIDE STABILISEE**
STABILISIERTE POLYAMIDZUSAMMENSETZUNG
STABILISED POLYAMIDE COMPOSITION

(30) Priorité: 13.04.2011 FR 1101123
(43) Date de publication de la demande: 19.02.2014
(73) Titulaire: RHODIA OPERATIONS, 93306 Aubervilliers (FR)
(72) Inventeur: JEOL, Stéphane, Cumming, GA 30041 (US); BADEL, Thierry, 69008 Lyon (FR)
(74) Mandataire: Schuck, Alexander
(86) Numéro de dépôt international: PCT/EP2012/056603
(87) Numéro de publication internationale: WO 2012/140099

(56) Documents cités:
- EP-A2- 0 359 129
- FR-A- 1 296 778
- FR-A- 1 298 533
- FR-A1- 2 357 594
- US-A1- 2008 146 704
- DATABASE WPI Week 198716 Thomson Scientific, London, GB; AN 1987-112127 XP002667558, -& JP 62 057423 A (SHINTO PAINT CO LTD) 13 mars 1987 (1987-03-13)

## Description

L'invention concerne un polyamide stabilisé vis-à-vis de la chaleur, de la lumière et/ou des intempéries par l'utilisation d'un composé comprenant au moins une fonction amine et au moins deux fonctions hydroxyle aliphatique. Le composé stabilisant peut également être ajouté au polyamide pour former des compositions polyamides stabilisées.

Le polyamide est un polymère synthétique largement utilisé pour la fabrication de divers articles, tels que des pièces moulées et/ou injectées. Le polyamide peut subir des dégradations lorsqu'il est soumis à des éléments ou conditions externes tels que les rayons UV, la chaleur, et/ou les intempéries. Des dégradations peuvent également être induites par la chaleur utilisée au cours de sa fabrication et/ou de sa mise en forme. Cette instabilité se traduit par des dégradations, des pertes de propriétés mécaniques, et des changements de couleur. Ces problèmes peuvent devenir critiques pour un certain nombre d'applications, tels que notamment des pièces dans le domaine de l'automobile qui sont notamment soumises à des chaleurs importantes.

Pour améliorer la stabilité vis-à-vis de la chaleur des polyamides, il est connu de leur associer des agents stabilisants particuliers. De nombreux additifs sont commercialisés à cet effet. On connait par exemple l'utilisation de l'iodure de cuivre, notamment en association avec d'iodure de potassium qui est dans la plupart des cas utilisé et qui fournit de bonnes propriétés de stabilisation. Il est également connu d'utiliser des additifs plus complexes tels que composés antioxydants phénoliques encombrés, des stabilisants présentant au moins un motif amine encombrée de type HALS ou des stabilisants phosphorés.

FR 1298533 A et FR 1296778 A divulguent des procédés pour la préparation de polymères de Nylon modifiés, consistant à faire réagir un polyamide avec un amino-alcool, de préférence du tri(hydroxyméthyl)aminométhane, du 2-amino-2-éthyl-1,3-propanediol, du 2-amino-1,3-propanediol ou du 2-amino-2-méthyl-1,3-propanediol. Le polyamide est du Nylon 6,6, du Nylon 6,10, du Nylon 6, du Nylon 8, du Nylon 11 ou l'Oronite. Dans les exemples, des mélanges de résines polyamide et des amino-alcools sont chauffés pour obtenir des polymères de Nylon modifiés.

US 2008/146704 A1 divulgue une composition de polyamide ignifuge comportant une composition ignifuge comprenant un composé basé sur le produit de réaction d'un dérivé de triazine avec l'acide cyanurique, un composé basé sur le produit de réaction d'un dérivé de triazine avec l'acide borique, phophorique ou polyphosphorique et un alcool polyhydrique, de préférence du tris(hydroxymethyl)aminomethane ou du 2,2-bis(hydroxymethyl)propane-1,3-diol. La composition de polyamide ignifuge est préparée par mélanger le polyamide et la composition ignifuge à l'état fondu et est utilisée pour fabriquer des articles moulés comme des pièces de véhicules.

JP 62 057423 A divulgue un procédé pour la préparation de poudres de polyamide par ajout du polyamide à un solvant du type alkanolamide dissolvant d'hydroxyéthyl-cellulose.

EP 0 359 129 A2 divulgue la préparation d'une composition de polyamide carboxylé modifié par fusion d'un mélange d'un polyamide avec un composé organique contenant des groupes carboxyliques. Dans les exemples, des mélanges contenant un polyamide et diéthanolamine sont chauffés.

Toutefois, il existe un besoin d'obtenir des compositions polyamides encore plus performantes au niveau de la stabilisation vis-à-vis de la chaleur, et à moindre cout.

La demanderesse a mis au point une composition polyamide permettant d'obtenir un excellent maintien des propriétés mécaniques après une longue exposition à la chaleur, la lumière et/ou les intempéries en utilisant un composé présentant au moins une fonction amine et au moins 2 fonctions hydroxyle aliphatique. Un tel composé lorsqu'il est ajouté au polyamide peut se lier chimiquement de manière covalente et/ou se retrouver dilué dans la matrice polyamide aux chaines du polyamide soit par réaction avec les groupements terminaux de type acide carboxylique soit par réaction avec les amides intracaténaires. La composition obtenue présente notamment un bon compromis de propriétés mécaniques et rhéologiques et notamment un niveau accru de fluidité en fondu.

La présente invention concerne l'utilisation d'un composé de formule (I) comme agent stabilisant vis-à-vis du vieillissement à la chaleur, à la lumière et/ou aux intempéries d'une composition polyamide obtenue par mélange d'au moins :
- une résine polyamide thermoplastique ; et
- un composé de formule (I) représenté par la formule :

   (R₁)NH-R-(OH)n (I)

   dans laquelle :
   - n est 2, 3 ou 4, ou n est 1, 2 ou 3 lorsque R₁ porte une fonction alcool,
   - R est un radical hydrocarboné aliphatique comprenant de 2 à 20 atomes de carbone,
   - R₁ est un atome d'hydrogène ou un radical hydrocarboné aliphatique substitué ou non, éventuellement comprenant des hétéroatomes sélectionné parmi N, S, O et/ou P, et
   - les fonctions alcools sont portées par des carbones aliphatiques.

Par « alkylaryle », on entend au sens de la présente invention que les groupes - OH sont portés par des atomes de carbones aliphatiques.

Dans le cas où le radical R₁ porte au moins une fonction alcool alors n peut être égal à 1.

Selon un mode de réalisation particulier, la composition comprend en outre au moins une charge, notamment de renfort, en particulier telle que définie ci-après, au moins un agent ignifugeant, en particulier tel que défini ci-après, et/ou au moins un additif, en particulier tel que défini ci-après, ces composés pouvant être présents en des teneurs telles que présentées dans la description.

Les fonctions alcools, représentées par -OH dans la formule (I), sont portées par des carbones aliphatiques. Le composé de formule (I) n'est ainsi pas un composé de type phénol.

Tout particulièrement, la fonction amine du composé de Formule (I) est une fonction amine primaire, autrement dit correspond au cas où R₁ = H et où le composé de Formule (I) est (HO)ₙ-R-NH₂.

La composition résultant peut notamment comprendre des chaines de polyamide comprenant des restes de composé de formule (I) liés de manière covalente, des chaines de polyamide non liées avec un reste de composé de formule (I) et des composés de formule (I) libres dilués dans la matrice polyamide.

La proportion molaire de composé de formule (I) lié de manière covalente au polyamide est préférentiellement comprise entre 10 et 100 %, plus préférentiellement comprise entre 30 à 70 %. La proportion molaire de composé d'alcool polyhydrique lié est notamment calculé par le rapport du nombre de mole de composé d'alcool polyhydrique lié sur le nombre de mole totale de composé d'alcool polyhydrique.

Les liaisons covalentes peuvent notamment permettre de diminuer, limiter, voire empêcher, les phénomènes conduisant à un « lavage » du composé de formule (I) de la composition. Ceci peut être très utile dans le cas de pièces en contact avec des liquides chauds, comme des pièces de circuit de refroidissement.

La présente invention concerne aussi l'utilisation du composé de formule (I) comme agent stabilisant vis-à-vis du vieillissement à la chaleur, à la lumière et/ou aux intempéries. Le composé de formule (I) peut en outre être utilisé en tant qu'agent fluidifiant la composition, notamment en tant qu'agent fluidifiant la composition en fondu, en particulier par rapport au test spirale.

n est préférentiellement compris entre 2 et 20, particulièrement compris entre 3 et 7. Tout particulièrement, le composé de Formule (I) est un aminotriol ou un aminotétraol.

R comprend de 2 à 20 atomes de carbone, plus préférentiellement de 4 à 10 atomes de carbone.

Le radical R peut par exemple être substitué par divers groupements, tel que par exemple une fonction amine, une fonction thiol ou un halogène comme par exemple Cl, F, Br ou I.

R correspond préférentiellement à une chaine aliphatique hydrocarbonée linéaire ou branchée et comprenant éventuellement des hétéroatomes tels que N, S, O et/ou P. Le composé de formule (I) selon l'invention peut également comporter d'autres fonctions aminés, telles que des amines primaire, secondaires et/ou tertiaires.

Avantageusement les fonctions hydroxyle aliphatique des composés de formule (I) ne sont pas encombrés, c'est-à-dire par exemple que les atomes de carbone situés en α de la fonction hydroxyle aliphatique ne sont de préférence pas substitués par des substituants encombrants, tels que des alkyles ramifiés.

Le composé de formule (I) est préférentiellement choisi dans le groupe comprenant: le tris(hydroxyméthyl) amino méthane (RN CAS : 77-86-1), le 3-amino-1,2-propanediol (RN CAS: 616-30-8), le 2-amino-1,3-propanediol (RN CAS : 534-03-2), le 2-amino-2-méthyle-1,3-propanediol (RN CAS : 115-69-5), le 3-méthyleamino-1,2-propanediol (RN CAS: 40137-22-2), la diéthanolamine (RN CAS: 111-42-2), le bis(2-hydroxypropyle)amine (RN CAS: 110-97-4), la N,N'-bis(2-hydroxyéthyle)éthylène diamine, l'aminopropyldiéthanolamine (RN CAS : 4985-85-7), et/ou leur sels.

On peut notamment citer comme sels, les chlorures d'ammonium, les bromure d'ammonium, les sulfates d'ammonium, les sulfonates d'ammonium, les phosphates d'ammonium.

A titre d'exemple particulier on peut citer le chlorhydrate de diéthanolamine, le chlorhydrate de 2-amino-1,3-propanediol, le chlorhydrate de tris(hydroxyméthyl) amino méthane.

Le composé de formule (I) peut également être un polymère comprenant des fonctions amines et des fonctions hydroxyles aliphatiques, tel que par exemple des polymère alcool vinyliques comprenant une ou plusieurs fonctions aminés, comme le copolymère vinylalcool/vinylamine, notamment connu sous la dénomination Erkol®.

On peut notamment ajouter dans la composition polyamide de 0,05 à 20 % en poids de composé de formule (I), par rapport au poids total de la composition, préférentiellement de 0,5 à 10 % en poids, encore plus préférentiellement de 1 à 5 % en poids, voire de 1,2 à 2,5 % en poids.

On peut notamment ajouter de 0,05 à 20 % en poids de composé de formule (I), par rapport au poids total du polyamide, notamment de 0,5 à 10 % en poids, en particulier de 1 à 7 % en poids, voire de 1,5 à 5 % en poids.

Selon un mode de réalisation particulier, le composé de formule (I) est présent :
- en une teneur allant de 1,4 à 5 % en poids, notamment de 1,6 à 4 % en poids par rapport au poids total de la composition et/ou
- en une teneur allant de 2 à 6 % en poids, notamment de 2,5 à 5 % en poids par rapport au poids total du polyamide.

La composition peut présenter une amélioration de ses performances par rapport à la contrainte en traction à la rupture et/ou du choc Charpy non-entaillé après un vieillissement de 500h, et en particulier de 1000 h, à 170°C.

La composition selon l'invention peut présenter :
- une rétention de la contrainte en traction à la rupture d'au moins 50 %, notamment d'au moins 70 % , en particulier d'au moins 80 % après vieillissement 500h à 210°C, et/ou
- une rétention de la contrainte en traction à la rupture d'au moins 50 %, notamment d'au moins 65 %, en particulier d'au moins 80 % après vieillissement 1000h à 210°C.

La composition selon l'invention peut présenter :
- une rétention du choc Charpy non-entaillé d'au moins 40 %, notamment d'au moins 60 %, en particulier d'au moins 70 % après vieillissement 500h à 210°C, et/ou
- une rétention du choc Charpy non-entaillé d'au moins 40 %, notamment d'au moins 50 %, en particulier d'au moins 60 % après vieillissement 1000h à 210°C.

Par ailleurs, la composition peut présenter une amélioration de la longueur moyenne d'écoulement, test Spirale, d'au moins 150 %, notamment d'au moins 200 %, voire d'au moins 250 % par rapport à une composition dépourvue de composé de Formule (I) et de composé de type polyol, comme le DPE, ou dipentaérythritol.

En particulier, la composition présente une amélioration de la longueur moyenne d'écoulement, en particulier selon le test Spirale, d'au moins 150 % par rapport à une composition comprenant une quantité identique, en poids, de DPE.

La contrainte en traction à la rupture, le choc Charpy non-entaillé et la longueur moyenne d'écoulement, selon le test Spirale, évoqués ci-dessus sont mesurés conformément aux protocoles présentés dans les exemples.

Le polyamide de l'invention est notamment choisi dans le groupe comprenant les polyamides obtenus par polycondensation d'au moins un diacide carboxylique aliphatique avec une diamine aliphatique ou cyclique ou cycloaliphatique ou arylaliphatique comme le PA 6.6, PA 6.10, PA 6.12, PA 10.10, PA 10.6, PA 12.12, PA 4.6, MXD6, PA 92, PA 102 ou entre au moins un diacide carboxylique aromatique et une diamine aliphatique ou aromatique comme les polytéréphtalamides du type PA 9T, PA 10T, PA 11T, PA 12T, PA 13T ou PA 6T/MT, PA 6T/6I, PA 6T/66, PA 66/6T, polyisophtalamides du type PA 6I, PA 6I/6T, les polynaphtalamides du type PA 10N, PA 11N, PA 12N, les polyaramides comme le Kevlar, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, PA 13 ou leur mélange et (co)polyamides. Comme type de copolyamide on peut notamment citer le polyamide 6/66, le polyamide 6/11, le polyamide 6/12, et le polyamide 11/12.

Les diamines et les diacides peuvent porter des hétéroatomes. On peut citer l'acide 5-hydroxyisophtalique, l'acide 5-sulfoisophtalique ou leurs sels ; tel que par exemple les de lithium, de sodium, ou de zinc.

On préfère notamment les polyamides semi-cristallins aliphatiques ou semi-aromatiques.

La résine polyamide thermoplastique est préférentiellement choisie dans le groupe comprenant: le polyamide 6, le polyamide 610, le polyamide 66 et le polyamide 66/6T.

De manière générale, le polyamide est un polyamide semi-cristallin présentant une viscosité apparente en fondu comprise entre 0,5 et 1200 Pa.s, mesurée selon la norme ISO 11443 à un taux de cisaillement de 1000 s⁻¹ à une température égale à 20°C au-dessus de sa température de fusion du polyamide, préférentiellement comprise entre 0,5 et 500 Pa.s.

On peut notamment utiliser des polyamides de poids moléculaires variables par addition avant ou pendant la polymérisation des monomères de polyamide, ou encore en voie fondue à l'extrusion, de monomères modifiant la longueur des chaînes, tel que notamment des composés difonctionnels et/ou monofonctionnels présentent des fonctions amines ou acides carboxyliques capables de réagir avec les monomères du polyamide ou le polyamide.

Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

On peut utiliser au début, en cours ou en fin de polymérisation tout type d'acides mono- ou di-carboxylique, aliphatiques ou aromatiques ou tout type d'amines mono- ou di-amines, aliphatiques ou aromatiques.

On peut utiliser tout particulièrement un polyamide obtenu au moins à partir d'acide adipique et d'hexaméthylène diamine ou de leurs sels tels que l'adipate d'hexaméthylènediamine, pouvant éventuellement comprendre diverses proportions d'autres monomères de polyamide. On peut citer à cet effet les polyamides 66/6T, contenant diverses teneur molaire en monomère acide téréphtalique.

Des polyamides selon l'invention peuvent aussi être obtenus par mélange, notamment en fondu. On peut par exemple mélanger un polyamide avec un autre polyamide, ou un polyamide avec un oligomère de polyamide, ou encore un polyamide avec des monomères modifiant la longueur des chaînes, tel que notamment des diamines, diacides carboxyliques, monoamines et/ou monoacides carboxyliques. On peut notamment ajouter au polyamide de l'acide isophtalique, de l'acide téréphtalique ou de l'acide benzoïque, par exemple à des teneurs d'environ 0,2 à 2 % en poids.

La composition de l'invention peut également comprendre les copolyamides dérivés notamment des polyamides ci-dessus, ou les mélanges de ces polyamides ou (co)polyamides.

On peut également utiliser des polyamides branchés de haute fluidité notamment obtenus par mélange en polymérisation, en présence des monomères de polyamide, d'au moins un composé multifonctionnel comprenant au moins 3 fonctions réactives identiques de type fonction amine ou fonction acide carboxylique.

On peut également utiliser comme polyamide de haute fluidité un polyamide étoile comprenant des chaînes macromoléculaires étoiles et le cas échéant des chaînes macromoléculaires linéaires. Les polymères comprenant de telles chaînes macromoléculaires étoiles sont par exemple décrits dans les documents WO97/24388 et WO99/64496.

Ces polyamides étoiles sont notamment obtenus par mélange en polymérisation, en présence des monomères de polyamide, un aminoacide ou lactame tel que le caprolactame, d'au moins un composé multifonctionnel comprenant au moins 3 fonctions réactives identiques de type fonction amine ou fonction acide carboxylique. Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

La présente invention concerne ainsi un procédé de fabrication d'une composition dans lequel on mélange au moins un polyamide, et/ou ses monomères, et un composé de formule (I). Ledit composé peut être ajouté au polyamide déjà formé ou partiellement formé, tel que notamment par mise en présence avec des oligomères du polyamide, ou encore être ajouté en début de synthèse, c'est-à-dire en présence majoritairement ou totalement des monomères permettant la formation du polyamide.

Selon une variante, le mélange polyamide, en particulier poudre de polyamide, et composé de Formule (I) n'est pas chauffé à une température supérieure à sa température de fusion pendant plus d'une heure.

Avantageusement, dans ce procédé, la quantité de composé de Formule (I), en poids, est inférieure à celle du polyamide ou de ses précurseurs, en particulier inférieure à 50 % du poids de polyamide, tout particulièrement inférieure ou égal à 30 % du poids de polyamide, voire inférieure ou égale à 10 % du poids de polyamide.

Les compositions polyamides sont généralement obtenues par mélange des différents composés, charges et/ou additifs, notamment le composé de formule (I) entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. On peut, selon des modes de réalisations particuliers, effectuer des pré-mélanges, en fondu ou non, du composé de formule (I) avant préparation de la composition finale. On peut par exemple effectuer un pré-mélange du composé de formule (I) dans une résine, par exemple du polyamide, de façon à réaliser un mélange maitre.

On peut également ajouter le composé de formule (I) en phase solide, notamment lors d'une post-condensation.

La composition selon l'invention peut comprendre un ou plusieurs autres polymères, de préférence polyamides ou copolyamides.

La composition selon l'invention peut comprendre entre 20 et 90 % en poids, préférentiellement entre 20 et 70 % en poids, et plus préférentiellement entre 35 et 65% en poids de polyamide, par rapport au poids total de la composition. La composition peut comprendre une teneur en polyamide allant de 25 à 90 % en poids, notamment de 30 à 70 % en poids par rapport au poids total de la composition.

Avantageusement, le polyamide n'est un polyamide modifié par fusion à une température de 180-250°C avec un composé organique contenant des groupes carboxyles.

Avantageusement, la composition est un matériau sous forme solide, c'est-à-dire qu'elle n'est pas sous forme de solution ni de dispersion. En particulier, ledit polyamide n'est pas soluble ou dispersible dans l'eau à température ambiante.

La composition peut en outre comprendre au moins une charge de renfort ou de remplissage. Les charges de renfort ou de remplissage sont des charges classiquement utilisées pour la réalisation de compositions polyamides. On peut notamment citer les charges fibreuses de renfort, telles que telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

On préfère notamment utiliser les fibres de renfort, telles que les fibres de verre. De façon préférentielle, la fibre la plus utilisé est la fibre de verre, de type dit coupé (chopped), ayant un diamètre compris entre 7 et 14 µm et une longueur inférieure à 5 mm. Ces charges peuvent présenter un ensimage surfacique qui assure l'adhésion mécanique entre les fibres et la matrice polyamide.

La composition selon l'invention peut comprendre entre 5 et 60 % en poids de charges de renfort ou de remplissage, préférentiellement entre 10 et 40 % en poids, par rapport au poids total de la composition.

La composition selon l'invention comprenant le polyamide tel que défini précédemment peut comprendre au moins un agent modificateur du choc, c'est-à-dire un composé capable de modifier la résistance aux chocs d'une composition polyamide. Ces composés modificateurs du choc comprennent préférentiellement des groupements fonctionnels réactifs avec le polyamide.

On entend selon l'invention par groupements fonctionnels réactifs avec le polyamide, des groupements capables de réagir ou d'interagir chimiquement avec les fonctions acides ou amines du polyamide, notamment par covalence, interaction ionique ou hydrogène ou liaison de van der Walls. De tels groupements réactifs permettent d'assurer une bonne dispersion des agents modificateurs de chocs dans la matrice polyamide. On obtient généralement une bonne dispersion avec des particules d'agents modificateurs de chocs ayant une taille moyenne comprise entre 0,1 et 2 µm dans la matrice.

On utilise préférentiellement des agents modificateurs du choc comprenant des groupements fonctionnels réactifs avec le polyamide en fonction de la nature acide ou amine du déséquilibre ΔGT=GTC-GTA (concentration en groupements terminaux acide GTC moins concentration en groupements terminaux amine GTA) du polyamide. Ainsi par exemple, si le ΔGT est « acide » (GTC>GTA) on utilisera préférentiellement des groupements fonctionnels réactifs capables de réagir ou d'interagir chimiquement avec les fonctions acides du polyamide, notamment par covalence, interaction ionique ou hydrogène ou liaison de van der Walls. Si par exemple, le ΔGT est « aminé » (GTA>GTC) on utilisera préférentiellement des groupements fonctionnels réactifs capables de réagir ou d'interagir chimiquement avec les fonctions amines du polyamide, notamment par covalence, interaction ionique ou hydrogène ou liaison de van der Walls. On utilise préférentiellement des agents modificateurs du choc ayant des groupements fonctionnels réactifs avec le polyamide présentant un ΔGT de nature « amine ».

Les agents modificateurs du choc peuvent très bien comprendre en eux-mêmes des groupements fonctionnels réactifs avec le polyamide, par exemple pour ce qui concerne l'éthylènes acide acrylique (EAA).

Il est également possible de leur adjoindre des groupements fonctionnels réactifs avec le polyamide, généralement par greffage ou copolymérisation, par exemple pour l'éthylène-propylène-diène (EPDM) greffé par de l'anhydride maléique.

On peut utiliser selon l'invention, les agents modificateurs de chocs qui sont des composés, oligomériques ou polymériques, comprenant au moins un des monomères suivants, ou leur mélange : éthylène, propylène, butène, isoprène, diène, acrylate, butadiène, styrène, octène, acrylonitrile, acide acrylique, acide méthacrylique, vinyle acétate, esters vinyliques tels que les esters acryliques et méthacryliques et le glycidyle méthacrylate. Ces composés selon l'invention peuvent également comprendre en plus d'autres monomères que ceux mentionnés précédemment.

La base du composé modificateur du choc, éventuellement appelé base élastomérique, peut être choisie dans le groupe comprenant : les polyéthylènes, les polypropylènes, les polybutènes, les polyisoprènes, les caoutchoucs d'éthylène-propylène (EPR), les caoutchoucs d'éthylène-propylène-diène (EPDM), les caoutchoucs d'éthylène et de butène, les caoutchoucs d'éthylène et d'acrylate, les caoutchoucs de butadiène et de styrène, les caoutchoucs de butadiène et d'acrylate, les caoutchoucs d'éthylène et octène, les caoutchoucs butadiène acrylonitrile, les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

En plus des groupements listés ci-dessus, ces agent modificateurs de chocs peuvent comprendre également, généralement greffés ou copolymérisés, des groupements fonctionnels réactifs avec le polyamide, tel que notamment des groupements fonctionnels suivant : les acides, tels que les acides carboxyliques, les acides salifiés, les esters en particulier, les acrylates et les méthacrylates, les ionomères, les groupes glycidyles notamment époxy, les esters glycidyles glycidyle , les anhydrides notamment les anhydrides maléiques, les oxazolines, les maléïmides, ou leurs mélanges.

Des tels groupements fonctionnels sur les élastomères sont par exemple obtenus par utilisation d'un co-monomère lors de la préparation de l'élastomère.

Comme agents modificateurs de chocs comprenant des groupements fonctionnels réactifs avec le polyamide, on peut notamment citer les terpolymères d'éthylène, ester acrylique et glycidyle méthacrylate, les copolymères d'éthylène et de butyl ester acrylate, les copolymères d'éthylène, n-butyl acrylate et glycidyle méthacrylate, les copolymères d'éthylène et d'anhydride maléique, les copolymères éthylène-propylène-diène greffé par de l'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

La proportion en poids des agents modificateur du choc dans la composition totale est notamment comprise entre 3 et 25 %, préférentiellement entre 4 et 8 %, par rapport au poids total de la composition.

La composition selon l'invention peut aussi comprendre d'autres additifs participant à la stabilisation thermique de la composition, tels que ceux choisis dans le groupe comprenant : le couple CuI et KI, les composés phénoliques encombrés, des stabilisants présentant au moins un motif amine encombrée de type HALS, des stabilisants phosphorés organiques ou inorganiques, tel que de l'hypophosphite de sodium ou de manganèse, ou encore des composés comprenant au moins d'un alcool polyhydrique comportant de 2 à 8 groupements hydroxyle aliphatique.

Selon une variante, elle comprend une teneur en Cul/Kl allant de 0,1 à 1,5 % en poids, notamment de 0,5 à 1,2 % en poids par rapport au poids total de la composition.

Selon une autre variante elle comprend une teneur limitée, voire nulle en agent stabilisant de type Cul/KHalogène.

La composition peut également comprendre une teneur limitée, voire nulle en agents stabilisants de types :
- phénols encombrés, et
- présentant au moins un motif amine encombrée de type HALS

Par teneur limitée on entend une teneur inférieure ou égale à 0,5 % en poids, notamment à 0,2 % en poids, en particulier à 0,1 % en poids, voire à 0,05 % en poids par rapport au poids total de la composition.

On peut citer ainsi comme alcools polyhydriques ceux mentionné dans le groupe comprenant: les diols, tels que le 1,5-pentanediol, le 2,2-diméthyl-1,3 propanediol, le triéthylène glycol, les polyéthers de glycol, les triols, comme le glycerol, le trimethylolpropane, le 2,3-di-(2'-hydroxyethyl)-cyclohexan-1-ol, l'hexane-1,2,6-triol, le 1,1,1-tris-(hydroxymethyl)ethane, le 3-(2'-hydroxyethoxy)-propane-1,2-diol, le 3-(2'-hydroxypropoxy)-propane-1,2-diol, le 2-(2'-hydroxyethoxy)-hexane-1,2-diol, le 6-(2'-hydroxypropoxy)-hexane-1,2-diol, le 1,1,1-tris-[(2'-hydroxyethoxy)-methyl]-ethane, le 1,1,1-tris-[(2'-hydroxypropoxy)-methyl]-propane, le 1,1,1-tris-(4'-hydroxyphenyl)-ethane, le 1,1,1-tris-(hydroxyphenyl)-propane, le 1,1,3-tris-(dihydroxy-3-methylphenyl)-propane, le 1,1,4-tris-(dihydroxyphenyl)-butane, le 1,1,5-tris-(hydroxyphenyl)-3-methylpentane, le di-trimethylopropane, l'ethoxylate de trimethylolpropane, ou le propoxylate de trimethylolpropane ; les polyols tels que le pentaerythritol, le dipentaerythritol, et le tripentaerythritol; et les saccharides tels que la cyclodextrine, le D-mannose, le glucose, le galactose, le sucrose, le fructose, le xylose, l'arabinose, le D-mannitol, le D-sorbitol, le D-or L-arabitol, le xylitol, l'iditol, le talitol, l'allitol, l'altritol, le gulitol, l'erythritol, le threitol, et le D-gulonique-y-lactone; et les composés semblables.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les agents anti-UV, les catalyseurs, les antioxydants, les antistatiques, les colorants, les matifiants, les additifs d'aide au moulage ou autres additifs conventionnels.

Selon une variante, les compositions sont dépourvues d'agent ignifugeant, en particulier d'agent ignifugeant du type triazine, notamment telles que décrites dans US 2008/0146704.

Ces charges et additifs peuvent être ajoutés au polyamide modifié par des moyens usuels adaptés à chaque charge ou additif, tel que par exemple lors de la polymérisation ou en mélange en fondu.

Selon un mode de réalisation particulier, la composition comprend, voire consiste en :
- une résine polyamide thermoplastique, en particulier en une teneur allant de 25 à 90 % en poids par rapport au poids total de la composition ; et
- un composé de formule (I), tout particulièrement en une teneur allant de 0,5 à 3 % en poids, notamment de 1 à 2,5 % en poids, et en particulier de 1,8 à 52,2 % en poids, par rapport au poids total de la composition, représenté par la formule :

   (R₁)NH-R-(OH)ₙ (I)

   dans laquelle :
   - n est supérieur ou égal à 2, et en particulier n est 3 ou 4 ; ou n = 1 si R1 porte au moins une fonction alcool,
   - R est un radical hydrocarboné aliphatique, cycloaliphatique, ou arylalkyle, substitué ou non, pouvant éventuellement comprendre des hétéroatomes tels que N, S, O et/ou P,
   - R₁ est un atome d'hydrogène ou un radical hydrocarboné aliphatique substitué ou non, éventuellement comprenant des hétéroatomes tels que N, S, O et/ou P, en particulier R₁ = H,
      et
   - les fonctions alcools du composé de Formule (I), représentées par -OH, sont portées par des carbones aliphatiques,
- optionnellement une charge, en particulier telle que définie ci-dessus, au moins un agent ignifugeant, en particulier tel que défini ci-dessus, et/ou au moins un additif, en particulier tel que défini ci-dessus, ces éléments pouvant être présents en des teneurs telles que présentées dans la présente description.

Les compositions polyamides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

On peut mélanger tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

La composition selon l'invention peut être utilisée pour tout procédé de mise en forme des matières plastiques, tels que par exemple le procédé de moulage, notamment le moulage par injection, l'extrusion, l'extrusion soufflage, ou encore le rotomoulage. Le procédé d'extrusion peut notamment être un procédé de filage ou de fabrication de films.

La présente invention concerne également la fabrication d'articles de type étoffes imprégnées ou articles composites à fibres continues. Ces articles peuvent notamment être fabriqués par mise en présence d'une étoffe et de la composition polyamide selon l'invention à l'état solide ou fondu. Les étoffes sont des surfaces textiles obtenues par assemblage de fils ou de fibres solidarisés par un procédé quelconque, tel que notamment collage, feutrage, tressage, tissage, tricotage. Ces étoffes sont aussi désignées comme des réseaux fibreux ou filamenteux, par exemple à base de fibres de verre, de fibres de carbone ou autres. Leur structure peut être aléatoire, unidirectionelle (1D), ou multidirectionelle (2D, 2,5D, 3D ou autre).

La présente invention concerne également des articles obtenus par mise en forme de la composition selon l'invention, par exemple par extrusion, moulage, ou moulage par injection. On peut citer comme articles ceux utilisés dans le domaine de l'automobile ou de l'électronique et de l'électricité par exemple.

En particulier, les articles comprennent des charges, en particulier des charges de renfort, notamment telles que définies dans la présente description.

La présente invention concerne aussi des articles réalisés pour des applications exposées à des températures élevées, notamment des températures supérieures ou égale à 80°C, plus particulièrement des températures supérieures ou égale à 110°C, plus spécifiquement des températures supérieures ou égale à 180°C, obtenus par mise en forme d'une composition selon l'invention.

On entend généralement par articles réalisés pour des applications exposées à des températures élevées, notamment des températures supérieures ou égale à 80°C, des articles fabriquées pour contenir ou transporter des fluides, c'est-à-dire des liquides ou gaz, portés à des températures élevées comme par exemple des articles du circuit de refroidissement d'une automobile qui sont destinés à maintenir le moteur à une température optimale et quasi constante d'environ 100°C. Ces articles selon la présente invention sont ainsi définis par leurs applications qui les exposent à des températures élevées ; ceci impliquant leurs conceptions, fabrications et destinations basées sur cette contrainte technique dans un mode de fonctionnement usuel.

Selon encore un autre de ses aspects, l'invention a pour objet l'utilisation d'articles dans des applications impliquant un chauffage prolongée, et en particulier impliquant un contact prolongé avec un liquide ou un fluide chaud. Ce contact peut être de l'ordre de plus de 500 ou 1000 heures.

Comme articles soumis à des températures élevées on peut citer par exemple les articles du circuit de refroidissement eau/glycol, par exemple la boite à eau, le tuyau de transfert, le boitier thermostatique, le boitier de dégazage, le radiateur, les articles du circuit d'air comme par exemple la tubulure turbo, l'échangeur air/air (intercooler), le boitier d'entrée ou de sortie d'air de refroidisseur turbo, le circuit de recirculation des gaz d'échappement (Exhaust Gas Recycling), le collecteur d'admission d'air et tubulures associées, le boitier de catalyseur, les pièces du groupe moto-ventilateur, les refroidisseurs intermédiaires, et les articles du circuit d'huile comme les couvres culasse, le carter d'huile, le module de filtration d'huile, le carter de distribution et la tuyauterie d'assemblage transportant l'huile. Ces articles sont bien connus du domaine des véhicules propulsés par un moteur comme les automobiles.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

### Caractérisations

Indice de viscosité en solution du polyamide dans l'acide formique (IV en mL/g) selon la norme ISO 307.

Teneurs en groupements terminaux acide (GTC) et amine (GTA) : dosées par potentiométrie, exprimées en meq/kg.

Température de fusion (T_{f}) et enthalpie associée (ΔHf), température de cristallisation au refroidissement (T_{c}) : déterminées par calorimétrie différentielle à balayage (DSC « Differential Scanning Calorimetry »), à l'aide d'un appareil Perkin Elmer Pyris 1, à une vitesse de 10°C/min.

### Formulations

Avant extrusion, les granulés de polyamide sont séchés à une teneur en eau inférieure à 1500 ppm. Des formulations sont réalisées par mélange des différents composants et additifs en voie fondu dans une extrudeuse bi-vis co-rotative WERNER&PLEIFEDER ZSK 40 fonctionnant à 40 kg/h et à une vitesse de 270 trs/min. Les températures de consigne des 8 zones sont respectivement : 250, 255, 260, 260, 265, 270, 275, 280 °C. Tous les composants de la formulation sont introduits au début de l'extrudeuse. Le jonc sorti d'extrudeuse est refroidi dans un bac d'eau, coupé sous la forme de granulés à l'aide d'un granulateur et conditionnés dans un sac thermo-sellé. Avant d'être injectés, les granulés sont séchés de sorte à obtenir un taux d'humidité inférieur à 1500 ppm.

Les additifs utilisés sont les suivants :
- Polyamide 66 Stabamid 27AE1 d'IV 138 mL/g et 31AE1 d'IV 175 mL/g de la société Rhodia
- Trométhamine (THAM) fourni par Sigma-Aldrich
- CuI et KI de AJAY Europe
- Dipentaerythritol de Perstorp « Di-penta », nommé DPE
- Fibres de verre OCV 983 de Owens Corning Vetrotex (35 % en poids)

### Exemples 1 à 4 : Vieillissements sous air

Les formulations réalisées sont injectées, sur une presse DEMAG 50T à 280°C avec une température de moule de 80°C, sous la forme d'éprouvettes multifonctions d'épaisseur 4 mm pour caractériser les propriétés mécaniques en traction (module en traction, contrainte à la rupture, déformation à la rupture - moyenne obtenue sur 5 échantillons) selon la norme ISO 527/1A et en impact (Charpy non entaillé - moyenne obtenue sur 10 échantillons) selon la norme ISO 179-1/1eU à 23°C avant et après vieillissement thermique sous air.

Le vieillissement thermique ventilé sous air est effectué en plaçant les éprouvettes dans une étuve Heraeus TK62120 régulée à 170 ou 210°C. A différents temps de vieillissement, des éprouvettes sont sorties de l'étuve, refroidies à température ambiante et placées dans des sacs thermo-sellés pour éviter qu'elles ne reprennent d'humidité avant évaluation de leurs propriétés mécaniques.

On définit alors la rétention de contrainte à la rupture ou de résistance à l'impact à un temps de vieillissement donné par le rapport à ces mêmes propriétés avant vieillissement. On définit ainsi la rétention en pourcentage.

Les formulations vieillies à 210°C ainsi que les propriétés sont regroupées dans le tableau 1 suivant :

**Tableau 1**

| | **C1** | **1** | **2** | **3** |
|---|---|---|---|---|
| PA 66 27AE1 (%) | 64,7 | - | - | - |
| P66 31AE1 (%) | - | 64,0 | 63,0 | 62,0 |
| Fibres de verre (%) | 35,0 | 35,0 | 35,0 | 35,0 |
| THAM (%) | 0 | 1,0 | 2,0 | 3,0 |
| CuI/KI (%) | 0,04/0,26 | 0 | 0 | 0 |

| | | | | |
|---|---|---|---|---|
| **Avant vieillissement** | | | | |
| Contrainte en traction à la rupture (MPa) | 210 | 210 | 203 | 199 |
| Impact Charpy non-entaillé (kJ/m2) | 90 | 83 | 81 | 43 |
| IV (mL/g) | 141 | 117 | nm | nm |

| **Après vieillissement 500h@ 210°C** | | | | |
|---|---|---|---|---|
| Contrainte en traction à la rupture (MPa) | 148 | 178 | 217 | 207 |
| Impact Charpy non-entaillé (kJ/m2) | 28 | 41 | 62 | 47 |
| Rétention : contrainte en traction à la rupture (%) | 70 | 85 | 107 | 104 |
| Rétention : Choc Charpy non-entaillé (%) | 31 | 49 | 77 | 109 |

| **Après vieillissement 1000h@ 210°C** | | | | |
|---|---|---|---|---|
| Contrainte en traction à la rupture (MPa) | 101 | 115 | 189 | 138 |
| Impact Charpy non-entaillé (kJ/m2) | 16 | 15 | 55 | 26 |
| Rétention : contrainte en traction à la rupture (%) | 48 | 55 | 93 | 69 |
| Rétention : Choc Charpy non-entaillé (%) | 18 | 18 | 68 | 60 |

| | | | | |
|---|---|---|---|---|
| nm : non mesuré les pourcentages (%) sont exprimés en poids | | | | |

La diminution de l'IV du PA 66 en présence de THAM indique qu'un greffage du THAM a eu lieu sur la chaîne PA 66. Le THAM greffé n'est pas extractible.

On observe ainsi que l'ajout du composé selon l'invention au polyamide permet une rétention des propriétés mécaniques à la fois en traction et en impact plus importante en comparaison avec une formulation polyamide classiquement stabilisée par le mélange Cul/Kl.

Les formulations vieillies à 170°C ainsi que les propriétés sont regroupées dans le tableau 2 suivant :

**Tableau 2**

| | **C2** | **C3** | **4** |
|---|---|---|---|
| PA 66 27AE1 (%) | 64,7 | 63,0 | - |
| P66 31AE1 (%) | - | - | 62,0 |
| Fibres de verre (%) | 35,0 | 35,0 | 35,0 |
| THAM (%) | - | - | 3,0 |
| DPE (%) | - | 2 | - |
| CuI/KI (%) | 0,04/0,26 | - | - |

| | | | |
|---|---|---|---|
| **Avant vieillissement** | | | |
| Contrainte en traction à la rupture (MPa) | 217 | 215 | 199 |
| Impact Charpy non-entaillé (kJ/m2) | 92 | 69 | 43 |

| **Après vieillissement 500h@ 170°C** | | | |
|---|---|---|---|
| Contrainte en traction à la rupture (MPa) | 225 | 212 | 210 |
| Impact Charpy non-entaillé (kJ/m2) | 41 | 49 | 49 |
| Rétention : contrainte en traction à la rupture (%) | 103 | 98 | 105 |
| Rétention : Choc Charpy non-entaillé (%) | 45 | 71 | 114 |

| **Après vieillissement 1000h@ 170°C** | | | |
|---|---|---|---|
| Contrainte en traction à la rupture (MPa) | 192 | 203 | 206 |
| Impact Charpy non-entaillé (kJ/m2) | 41 | 47 | 44 |
| Rétention : contrainte en traction à la rupture (%) | 88 | 94 | 104 |
| Rétention : Choc Charpy non-entaillé (%) | 45 | 68 | 102 |

On observe ainsi que l'ajout du composé selon l'invention au polyamide permet une rétention des propriétés mécaniques à la fois en traction et en impact plus importante en comparaison avec une formulation polyamide classiquement stabilisée par le mélange Cul/Kl, ou avec une formulation polyamide stabilisée par du DPE.

### Exemples 5 à 7 : Test de fluidité

Les formulations réalisées sont séchées puis injectées sur une presse Demag 80T dans un moule spirale Hasco avec une pression d'injection de 1500bars, une pression de maintien de 1500bars et une contre pression de 50bars. Les températures de consigne des quatre zone du fourreau sont fixées à 280°C et la température du moule est fixée à 80°C. Le test spirale consiste à déterminer le remplissage comparatif du moule selon les formulations. L'unité de mesure est la longueur de spirales en mm. La longueur moyenne est calculée sur 30 spirales après une mise en régime de 100 pièces.

Les formulations évaluées ainsi que les propriétés sont regroupées dans le tableau 3 suivant :

**Tableau 3**

| | **C4** | **C5** | **5** | **6** | **C6** | **C7** | **7** |
|---|---|---|---|---|---|---|---|
| PA 66 27AE1 (%) | - | - | - | - | 64,7 | 63 | 63 |
| P66 31AE1 (%) | 64,7 | 63 | 63 | 62 | - | - | - |
| Fibres de verre (%) | 35 | 35 | 35 | 35 | 35 | 35 | 35 |
| THAM (%) | - | - | 2,0 | 3,0 | - | - | 2,0 |
| DPE (%) | - | 2,0 | - | - | - | 2,0 | - |
| CuI/KI (%) | 0,04/0,26 | - | - | - | 0,04/0,26 | - | - |

| | | | | | | | |
|---|---|---|---|---|---|---|---|
| **Test spirale** | | | | | | | |
| Longueur moyenne d'écoulement (mm) | 263 | 402 | 636 | 853 | 303 | 495 | 743 |
| Ecart-type | 1,2 | 1,9 | 3,4 | 5,4 | 1,3 | 3,2 | 5,7 |

On observe ainsi que l'ajout du composé selon l'invention au polyamide permet d'augmenter très significativement la fluidité de la formulation.

## Revendications

1. Utilisation d'un composé de formule (I) comme agent stabilisant vis-à-vis du vieillissement à la chaleur, à la lumière et/ou aux intempéries d'une composition polyamide obtenue par mélange d'au moins :
- une résine polyamide thermoplastique ; et
- un composé de formule (I) représenté par la formule :
(R₁)NH-R-(OH)n (I)
dans laquelle :
- n est 2, 3 ou 4, ou n est 1, 2 ou 3 lorsque R₁ porte une fonction alcool,
- R est un radical hydrocarboné aliphatique comprenant de 2 à 20 atomes de carbone,
- R₁ est un atome d'hydrogène ou un radical hydrocarboné aliphatique substitué ou non, éventuellement comprenant des hétéroatomes sélectionné parmi N, S, O et/ou P, et
- les fonctions alcools sont portées par des carbones aliphatiques.

2. Utilisation selon la revendication 1, **caractérisée en ce que** la composition comprend des chaînes de polyamide comprenant des restes de composé de formule (I) liés de manière covalente, des chaînes de polyamide non liées avec un reste de composé de formule (I) et des composés de formule (I) libres dilués dans la matrice polyamide.

3. Utilisation selon l'une quelconque des revendications 1 à 2, **caractérisée en ce que** le composé de formule (I) est choisi dans le groupe comprenant : le tris(hydroxyméthyl) amino méthane, le 3-amino-1,2-propanediol, le 2-amino-1,3 propanediol, le 2-amino-2-méthyle-1,3-propanediol, le 3-méthyleamino-1,2-propanediol, la diéthanolamine, le bis(2-hydroxypropyle)amine, la N,N'-bis(2-hydroxyéthyle)éthylène diamine, l'aminopropyldiéthanolamine, et/ou leur sels.

4. Utilisation selon l'une quelconque des revendications 1 à 3, **caractérisée en ce que** la composition est obtenue par ajout de 0,05 à 20 % en poids de composé de formule (I), par rapport au poids total de la composition.

5. Utilisation selon l'une quelconque des revendications 1 à 4, **caractérisée en ce que** la résine polyamide thermoplastique est choisie dans le groupe comprenant : le polyamide 6, le polyamide 610, le polyamide 66 et le polyamide 66/6T.

6. Utilisation selon l'une quelconque des revendications 1 à 5, **caractérisée en ce que** le polyamide est un polyamide semi-cristallin présentant une viscosité apparente en fondu comprise entre 0,5 et 1200 Pa.s, mesurée selon la norme ISO 11443 à un taux de cisaillement de 1000 s⁻¹ à une température égale à 20°C au-dessus de sa température de fusion du polyamide.

7. Utilisation selon l'une quelconque des revendications 1 à 6, **caractérisée en ce que** la composition comprend entre 20 et 90 % en poids de polyamide, par rapport au poids total de la composition.

8. Utilisation selon l'une quelconque des revendications 1 à 7, **caractérisée en ce que** ladite composition comprend au moins une charge de renfort ou de remplissage.

9. Utilisation selon l'une quelconque des revendications 1 à 8, **caractérisée en ce que** ladite composition comprend au moins un agent modificateur du choc.

10. Utilisation selonl'une quelconque des revendications 1 à 9, **caractérisé en ce que** le composé de formule (I) est également un agent améliorant la fluidité, en particulier mesurée selon le test spirale, d'une composition comprenant du polyamide.

## Patentansprüche

1. Verwendung einer Verbindung der Formel (I) als Stabilisator gegen durch Wärme, Licht und/oder Witterungseinflüsse bedingte Alterung einer durch Mischen von mindestens
- einem thermoplastischen Polyamidharz und
- einer Verbindung der Formel (I), die durch die folgende Formel wiedergegeben wird:
(R₁)NH-R-(OH)n (I),
in der:
- n für 2, 3 oder 4 steht oder n für 1, 2 oder 3 steht, wenn R₁ eine Alkoholfunktion trägt,
- R für einen aliphatischen Kohlenwasserstoffrest mit 2 bis 20 Kohlenstoffatomen steht,
- R₁ für ein Wasserstoffatom oder einen substituierten oder unsubstituierten aliphatischen Kohlenwasserstoffrest, der gegebenenfalls aus N, S, O und/oder P ausgewählte Heteroatome umfasst, steht und
- die Alkoholfunktionen an aliphatischen Kohlenstoffatomen stehen,
erhaltenen Polyamidzusammensetzung.

2. Verwendung nach Anspruch 1, **dadurch gekennzeichnet, dass** die Zusammensetzung Polyamidketten, die kovalent gebundene Reste der Verbindung der Formel (I) umfassen, Polyamidketten, die nicht mit einem Rest der Verbindung der Formel (I) verknüpft sind, und freie Verbindungen der Formel (I), die in der Polyamidmatrix verdünnt sind, umfasst.

3. Verwendung nach einem der Ansprüche 1 bis 2, **dadurch gekennzeichnet, dass** die Verbindung der Formel (I) aus der Gruppe bestehend aus Tris(hydroxymethyl)aminomethan, 3-Amino-1,2-propandiol, 2-Amino-1,3-propandiol, 2-Amino-2-methyl-1,3-propandiol, 3-Methylamino-1,2-propandiol, Diethanolamin, Bis(2-hydroxypropyl)amin, N,N'-Bis(2-hydroxyethyl)ethylendiamin, Aminopropyldiethanolamin und/oder Salzen davon ausgewählt ist.

4. Verwendung nach einem der Ansprüche 1 bis 3, **dadurch gekennzeichnet, dass** die Zusammensetzung durch Zugabe von 0,05 bis 20 Gew.-% Verbindung der Formel (I), bezogen auf das Gesamtgewicht der Zusammensetzung, erhalten wird.

5. Verwendung nach einem der Ansprüche 1 bis 4, **dadurch gekennzeichnet, dass** das thermoplastische Polyamidharz aus der Gruppe umfassend Polyamid 6, Polyamid 610, Polyamid 66 und Polyamid 66/6T ausgewählt ist.

6. Verwendung nach einem der Ansprüche 1 bis 5, **dadurch gekennzeichnet, dass** es sich bei dem Polyamid um ein teilkristallines Polyamid mit einer gemäß ISO-Norm 11443 bei einer Scherrate von 1000 s⁻¹ und einer Temperatur von 20 °C über dem Schmelzpunkt des Polyamids gemessenen scheinbaren Schmelzeviskosität zwischen 0,5 und 1200 Pa.s handelt.

7. Verwendung nach einem der Ansprüche 1 bis 6, **dadurch gekennzeichnet, dass** die Zusammensetzung zwischen 20 und 90 Gew.-% Polyamid, bezogen auf das Gesamtgewicht der Zusammensetzung, umfasst.

8. Verwendung nach einem der Ansprüche 1 bis 7, **dadurch gekennzeichnet, dass** die Zusammensetzung mindestens einen verstärkenden oder streckenden Füllstoff umfasst.

9. Verwendung nach einem der Ansprüche 1 bis 8, **dadurch gekennzeichnet, dass** die Zusammensetzung mindestens einen Schlagzähigkeitsmodifikator umfasst.

10. Verwendung nach einem der Ansprüche 1 bis 9, **dadurch gekennzeichnet, dass** es sich bei der Verbindung der Formel (I) auch um ein Mittel zur Verbesserung der insbesondere gemäß dem Spiraltest gemessenen Fließfähigkeit einer Polyamid umfassenden Zusammensetzung handelt.

## Claims

1. Use of a compound of formula (I) as a stabilizer with respect to heat-induced, light-induced and/or bad-weather-induced ageing of a polyamide composition obtained by mixing at least:
- a thermoplastic polyamide resin; and
- a compound of formula (I) represented by the formula:
(R₁)NH-R-(OH)n (I)
in which:
- n is 2, 3 or 4, or n is 1, 2 or 3 when R₁ bears an alcohol function,
- R is an aliphatic hydrocarbon-based radical comprising from 2 to 20 carbon atoms,
- R₁ is a hydrogen atom or a substituted or unsubstituted aliphatic hydrocarbon-based radical optionally comprising heteroatoms selected from N, S, O and/or P, and
- the alcohol functions are borne by aliphatic carbons.

2. Use according to Claim 1, **characterized in that** the composition comprises polyamide chains comprising covalently bonded residues of compound of formula (I), polyamide chains not bonded with a residue of compound of formula (I) and free compounds of formula (I) diluted in the polyamide matrix.

3. Use according to either one of Claims 1 and 2, **characterized in that** the compound of formula (I) is selected from the group comprising:
tris(hydroxymethyl)aminomethane, 3-amino-1,2-propanediol, 2-amino-1,3-propanediol, 2-amino-2-methyl-1,3-propanediol, 3-methylamino-1,2-propanediol, SV11/71403PCEP
diethanolamine, bis(2-hydroxypropyl)amine, N,N'-bis(2-hydroxyethyl)ethylenediamine, aminopropyldiethanolamine, and/or salts thereof.

4. Use according to any one of Claims 1 to 3, **characterized in that** the composition is obtained by addition of 0.05 to 20% by weight of compound of formula (I), relative to the total weight of the composition.

5. Use according to any one of Claims 1 to 4, **characterized in that** the thermoplastic polyamide resin is selected from the group comprising: polyamide 6, polyamide 610, polyamide 66 and polyamide 66/6T.

6. Use according to any one of Claims 1 to 5, **characterized in that** the polyamide is a semicrystalline polyamide having an apparent melt viscosity of between 0.5 and 1200 Pa.s, measured according to the ISO 11443 standard at a shear rate of 1000 s⁻¹ at a temperature equal to 20°C above the melting point of the polyamide.

7. Use according to any one of Claims 1 to 6, **characterized in that** the composition comprises between 20 and 90% by weight of polyamide, relative to the total weight of the composition.

8. Use according to any one of Claims 1 to 7, **characterized in that** said composition comprises at least one reinforcing or bulking filler.

9. Use according to any one of Claims 1 to 8, **characterized in that** said composition comprises at least one impact modifier.

10. Use according to any one of Claims 1 to 9, **characterized in that** the compound of formula (I) is also an agent for improving the fluidity, in particular measured according to the spiral test, of a composition comprising polyamide.
